# FASCICULE DE BREVET EUROPEEN

(11) **EP 1 197 058 B1**
(45) Date de publication et mention de la délivrance du brevet: **23.02.2005**
(21) Numéro de dépôt: 00953250.8
(22) Date de dépôt: 18.07.2000
(51) Int. Cl.: H04L 29/06

(54) **DISPOSITIF D'INTERFACE ASYNCHRONE, ET SYSTEME DE COMMUNICATION AYANT UN EQUIPEMENT MUNI D'UN TEL DISPOSITIF**
ASYNCHRONE SCHNITTSTELLE UND KOMUNIKATIONSSYSTEM ZUR BEREITSTELLUNG DIESER SCHNITTSTELLE
ASYNCHRONOUS INTERFACE DEVICE, AND COMMUNICATION SYSTEM COMPRISING AN EQUIPMENT PROVIDED WITH SUCH A DEVICE

(30) Priorité: 19.07.1999 FR 9909329
(43) Date de publication de la demande: 17.04.2002
(73) Titulaire: Eads Telecom, 78180 Montigny Le Bretonneux (FR)
(72) Inventeur: HARL, Jean-Benoît, F-75014 Paris (FR); LABAUME, Pierre, F-78180 Montigny-Le-Bretonneux (FR)
(74) Mandataire: Loisel, Bertrand
(86) Numéro de dépôt international: PCT/FR2000/002060
(87) Numéro de publication internationale: WO 2001/006731

(56) Documents cités:
- EP-A- 0 340 613
- EP-A- 0 448 232
- US-A- 5 666 362

## Description

La présente invention concerne une interface de type asynchrone entre un équipement et un ordinateur.

Elle trouve application lorsque la liaison numérique asynchrone transporte en mode (full) duplex des signaux analogiques échantillonnés ou des données, traités par l'équipement en relation avec une horloge synchrone.

Dans le domaine des télécommunications, on est amené à optimiser les équipements pour tirer parti de la puissance de traitement des ordinateurs, notamment des micro-ordinateurs. Ceci conduit à limiter la puissance d'un certain nombre d'équipements qui procèdent essentiellement à des adaptations d'interface pour des réseaux de communication.

Dans le cas de la téléphonie, le réseau habituel, de type circuit, porte un flux numérique synchrone dont les caractères élémentaires peuvent représenter des échantillons de parole numérisée, ou la porteuse modulée d'un modem, etc. Le débit, régulier et full duplex, peut en particulier être de 64 kbit/s (cas d'un canal B du RNIS), l'horloge étant issue du réseau.

L'objet de l'optimisation précitée est de transférer de façon simple ce flux de caractères aux logiciels de traitement exécutés par l'ordinateur, pour permettre des opérations telles que modulation, reconnaissance de parole, annulation d'écho, ..., et réaliser de cette façon des fonctionnalités variées exploitant la puissance de calcul de l'ordinateur (téléphonie, réalisation de serveurs vocaux interactifs, envoi et réception de télécopies, consultation de services télématiques, échange de fichiers, ... ).

L'interface la plus commune et la plus simple dont sont équipés les micro-ordinateurs est une interface externe gérée par des commandes de type entrée/sortie et un mécanisme d'interruption. Cette interface est de type série ou parallèle et peut comporter une mémoire de type premier entré - premier sorti (FIFO) de quelques octets permettant de regrouper dans le même traitement d'interruption plusieurs lectures et plusieurs écritures:

Une difficulté est que le système d'exploitation (OS) du micro-ordinateur est un logiciel multitâches soumis à de nombreuses contraintes. De ce fait, bien que les machines soient matériellement de plus en plus puissantes, le système d'exploitation ne peut pas garantir en permanence un temps de traitement d'interruption compatible avec les interfaces les plus courantes. Dans ce cas, il y a perte d'information dans le flux de caractères, ce qui dégrade les performances globales de l'application.

De plus, l'optimisation de l'équipement et le caractère synchrone du flux global font que les méthodes de correction d'erreurs entre l'équipement et le micro-ordinateur s'appliquent mal car elles entraînent une augmentation du débit local, qui aggrave la cause du problème, et des retards de transfert liés à la nécessité d'augmenter la taille des mémoires tampon des interfaces asynchrones.

Pour tenir compte du caractère synchrone du flux, l'ordinateur a son débit moyen d'émission sur la liaison asynchrone asservi par des commandes délivrées par l'équipement, et il doit accepter l'ensemble des caractères en réception, sans perte.

Une difficulté supplémentaire est que l'équipement transfère les caractères dans la FIFO de l'interface asynchrone de l'ordinateur sans connaître à quel moment cette FIFO est lue par le processeur. Dans de nombreux systèmes, cette information peut être délivrée par une fonction appropriée de l'interface, par exemple par un signal électrique (signal RTS sur une liaison série). Mais dans le cas des micro-ordinateurs usuels et des interfaces communes, cette information n'est pas disponible à l'extérieur et doit donc être traitée par le logiciel d'interruption du. micro-ordinateur, ce qui augmente les retards de traitement. Cette information n'est donc pas utilisable dans ce contexte.

Le document EP-A*-*0 448 232 propose une interface synchrone à multiplexage temporel. Il décrit des moyens pour recevoir et retenir des données, et des moyens pour transférer ces données à une ligne de données si un message de déclenchement du transfert est activé. La présente demande diffère du document cité en ce que l'emission de caractères par la mémoire tampon est assujettie à la réception de caractères sur la même liaison asynchrone. Cette caractéristique est absente du document cité qui considère un système de contrôle de la disposition des données dans le découpage temporel.

La présente invention a pour but de proposer un mode de transmission simple d'un flux symétrique full duplex sur une liaison asynchrone reliée à un équipement, permettant à un tel équipement d'échanger de manière efficace et en minimisant les erreurs des caractères numériques avec un ordinateur pouvant être équipé d'une interface asynchrone et d'un système d'exploitation courants.

Selon l'invention, il est proposé un dispositif d'interface, comprenant une mémoire tampon recevant un flux de caractères numériques, des moyens de commande d'émission de caractères issus de ladite mémoire tampon sur une liaison asynchrone bidirectionnelle, et des moyens de réception. de caractères sur la liaison asynchrone, les caractères émis et reçus sur la liaison asynchrone bidirectionnelle, ainsi que ledit flux, ayant des débits moyens identiques. Les moyens de commande d'émission coopèrent avec les moyens de réception pour commander l'émission d'un caractère depuis la mémoire tampon en réponse à la réception d'un caractère sur la liaison asynchrone.

Selon l'invention, il est également proposé un système de communication, comprenant un ordinateur relié par une liaison asynchrone à un équipement ayant un fonctionnement synchrone, dans lequel l'ordinateur comprend un processeur agencé pour exécuter des applications de communication impliquant l'échange de caractères en duplex avec l'équipement, et une interface de raccordement à la liaison asynchrone comportant une mémoire tampon de réception de caractères depuis l'équipement, l'échange de caractères avec l'équipement comprenant l'exécution par le processeur d'une procédure d'interruption au cours de laquelle, si le processeur commande l'émission d'au moins un caractère sur la liaison asynchrone, il lit le contenu de la mémoire tampon de réception, et dans lequel ledit équipement comporte un dispositif d'interface tel que défini ci-dessus pour le raccordement à la liaison asynchrone.

Le dispositif d'interface selon l'invention exploite la façon dont l'interruption traite les fonctions d'interface et les indications externes qui en découlent. L'interruption relative à l'interface traite à la fois les fonctions d'émission et de réception, et se termine dans tous les cas après avoir commandé les émissions nécessaires et effectué toutes les lectures possibles dans le sens réception.

L'émission par l'ordinateur d'un caractère indique donc à l'équipement qu'à l'instant ou le caractère a été émis, l'interface de l'ordinateur a été préparée également pour accepter de nouveaux caractères en réception. La gestion de l'interface était à cet instant dans un traitement de type interruption et a donc également accompli les fonctions de réception. Ce traitement s'applique en particulier au cas où l'interface est gérée par une interruption avec lecture et écriture de mémoires de type FIFO pour respectivement la réception et l'émission.

Comme le flux global est symétrique et full duplex, le dispositif d'interface de l'équipement considère que toute réception de caractère venant de l'ordinateur correspond à une autorisation d'en émettre un, la FIFO de réception de l'ordinateur ayant été vidée.

Le débit moyen sur la liaison asynchrone est avantageusement asservi par l'équipement dans le sens de la réception, c'est-à-dire de l'ordinateur vers l'équipement. Le mécanisme contrôlant l'émission asynchrone vers l'ordinateur assure alors l'asservissement dans l'autre sens.

La liaison asynchrone peut être de type électrique, optique ou radiofréquence.

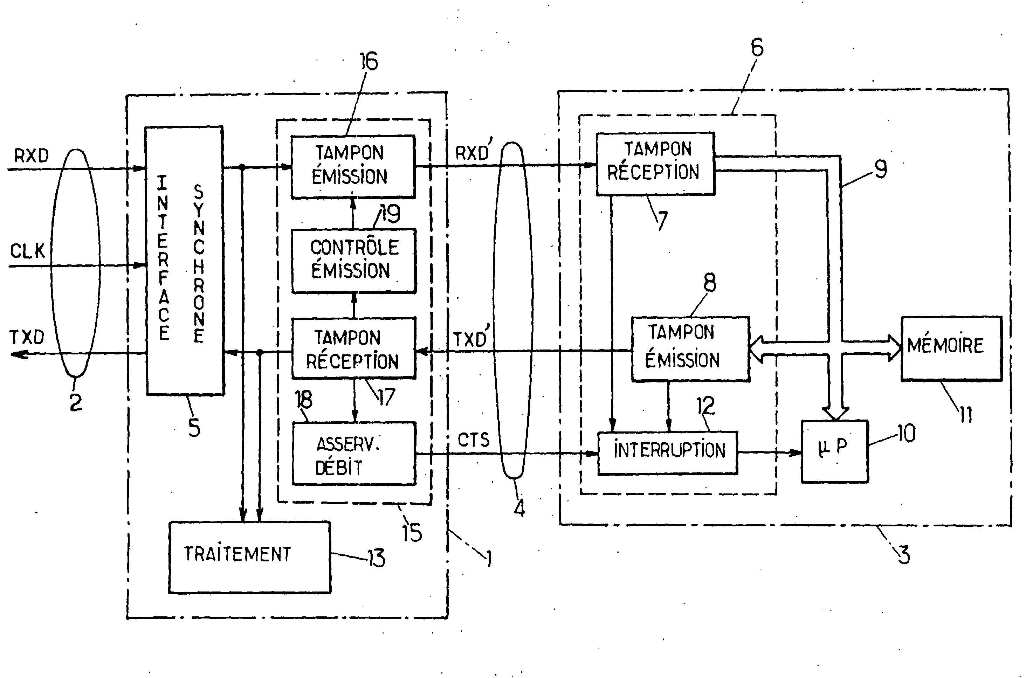

D'autres particularités et avantages de la présente invention apparaîtront dans la description ci-après d'un exemple de réalisation non limitatif, en référence au dessin annexé dans lequel la figure unique est un schéma synoptique d'un système de communication selon l'invention.

Le système représenté comprend un équipement de télécommunications 1 relié à un réseau par l'intermédiaire d'une ligne synchrone 2, et un micro-ordinateur 3 relié à l'équipement 1 par une liaison asynchrone 4.

Par la ligne synchrone 2, l'équipement 1 reçoit et émet des signaux duplex respectivement notés RXD et TXD, et reçoit en outre un signal d'horloge CLK. A titre d'exemple, la ligne synchrone 2 peut correspondre à un canal B du RNIS cadencé par une horloge CLK à 64 kbit/s. L'équipement 1 comprend une interface synchrone 5 de type classique assurant les traitements d'interface requis conformément aux protocoles de communication employés dans le réseau.

La liaison asynchrone 4 transporte un signal TXD' de l'ordinateur 3 vers l'équipement 1, à partir duquel sera formé le signal TXD émis vers le réseau, un signal RXD' de l'équipement 1 vers l'ordinateur 3, formé à partir du signal RXD reçu du réseau, et un signal binaire de contrôle CTS de l'équipement 1 vers l'ordinateur 3.

Chacun des signaux RXD', TXD' peut être purement en série ou en partie en parallèle. Dans l'exemple décrit, ces signaux sont formés de caractères successifs constitués par des octets. La liaison 4 peut correspondre à une interface série asynchrone de débit 115,2 kbit/s, couramment utilisée dans les micro-ordinateurs de type PC (ports COM1 à COM8).

Au niveau du micro-ordinateur 3, l'interface asynchrone 6 comporte classiquement une mémoire tampon de réception 7 recevant le signal numérique RXD' et une mémoire tampon d'émission 8 délivrant le signal numérique TXD'. Chacune de ces deux mémoires tampon a par exemple une capacité de 16 caractères. Elles sont reliées au bus 9 du processeur central 10 de l'ordinateur. La figure montre encore une mémoire de travail 11 de l'ordinateur 3, dans laquelle sont transférées les caractères reçus dans la mémoire tampon 7 et depuis laquelle sont transférés les caractères émis par l'intermédiaire de la mémoire tampon 8. De façon classique, ces transferts sont commandés par une procédure d'interruption exécutée par le microprocesseur 10 dans le cadre de la gestion de l'interface asynchrone 6. Cette procédure d'interruption peut notamment être déclenchée en réponse à un signal issu d'un gestionnaire d'interruption 12 de l'interface asynchrone 6.

Ainsi qu'il est usuel dans les ordinateurs de type PC ou analogue, le microprocesseur 10 est supervisé par un système d'exploitation multitâches, par exemple le système de marque Windows commercialisé par la société Microsoft.

Dans le cadre d'un système de télécommunications, les applications exécutées par le processeur 10 peuvent comprendre, par exemple, des applications de téléphonie, de télécopie, de modem logiciel, de transmission de données, de serveur vocal interactif; de traitement de parole et/ou de reconnaissance de parole. Ces différents traitements peuvent être effectués sur le signal reçu RXD, RXD' et/ou sur le signal émis TXD, TXD'. Le cas échéant, le bus 9 du processeur peut être relié à d'autres périphériques utiles dans le cadre des applications concernées. Il est à noter que le micro-ordinateur 3 n'effectue pas nécessairement la totalité des traitements du terminal de télécommunication. Le cas échéant, certains de ces traitements peuvent être effectués par des unités 13 faisant partie de l'équipement 1.

Le dispositif d'interface 15 de l'équipement 1 comporte une mémoire tampon d'émission 16 recevant un flux numérique formé par l'interface synchrone 5 à partir du signal RXD et délivrant le signal RXD' sur la liaison asynchrone 4. Il comporte également une mémoire tampon de réception 17 recevant le signal TXD' sur la liaison asynchrone 4 et dans laquelle l'interface asynchrone 5 lit les caractères à 64 kbit/s pour former le signal TXD émis sur la ligne 2.

L'interface asynchrone 15 comporte encore une unité 18 qui, de façon classique, produit le signal CTS émis vers l'ordinateur 3 en fonction du remplissage de la mémoire tampon de réception 17. A titre d'exemple, l'unité 18 peut activer le signal CTS (« Clear To Send ») lorsque le remplissage de la mémoire tampon 17 est de moins de 25 % de sa capacité, et désactiver le signal CTS pour inhiber la transmission de caractères depuis l'ordinateur 3 lorsque le remplissage de la mémoire tampon 17 est de plus de 50 % de sa capacité. Dans le cadre de la présente application, l'unité 18 sert à asservir le débit moyen sur la liaison asynchrone 4 les caractères sont transférés de l'ordinateur 3 vers l'équipement 1, par exemple par groupes de 8 caractères, avec un débit instantané de 115,2 kbit/s supérieur à celui de la ligne 2, et le fait que l'interface synchrone 5 extraie les caractères de la mémoire tampon 17 au rythme de 64 kbit/s assure que ce débit sera respecté en moyenne sur la liaison asynchrone 4. Le dimensionnement des mémoires tampons 7, 8 et des groupes de caractères transférés est bien entendu choisi pour tenir compte des temps finis de propagation des signaux sur la liaison asynchrone 4 et de traitement de l'interruption (tampons de 16 caractères et groupes transférés de 8 caractères dans l'exemple ci-dessus).

En réponse à un changement d'état du signal CTS, le gestionnaire d'interruption 12 de l'interface 6 de l'ordinateur prévient le processeur 10 pour que le programme d'interruption adopte le comportement approprié. Ce programme peut notamment être exécuté en réponse à une interruption générée lorsqu'au moins un caractère est présent dans la mémoire tampon de réception 7. Au cours de chacune de ces interruptions, le processeur 10 transfère tout le contenu de la mémoire tampon 7 dans la mémoire de travail 11, et commande l'émission d'un ou plusieurs caractères par la mémoire tampon 8 si le signal CTS le permet.

Ainsi, en recevant un caractère dans sa mémoire tampon de réception 17, le dispositif d'interface 15 de l'équipement 1 peut savoir que la mémoire tampon 7 de l'ordinateur a été vidée et est donc disponible pour recevoir de nouveaux caractères.

L'invention exploite cette connaissance en prévoyant dans le dispositif d'interface 15 une unité 19 qui commande l'émission des caractères depuis la mémoire tampon 16 vers la ligne asynchrone 4 en fonction d'une information reçue de la mémoire tampon de réception 17 pour indiquer la réception d'un caractère en sens inverse sur la liaison 4. Lorsqu'un caractère est reçu par la mémoire tampon 17, l'unité 19 autorise l'émission d'un caractère depuis la mémoire tampon 16. Ceci assure l'échange 1/1 des caractères sur la liaison asynchrone 4, et donc le respect du mode full duplex. En conséquence, l'asservissement du débit au moyen du signal CTS est effectif pour les deux sens de communication.

Le processus assure la non-saturation de la mémoire tampon de réception 7 de l'interface asynchrone de l'ordinateur, même dans les situations où l'exécution du programme d'interruption relatif à l'interface asynchrone 6 est retardée ou perturbée par d'autres tâches exécutées par le microprocesseur 10.

## Revendications

1. Dispositif d'interface, comprenant une mémoire tampon (16) recevant un flux de caractères numériques, des moyens (19) de commande d'émission de caractères issus de ladite mémoire tampon sur une liaison asynchrone bidirectionnelle (4), et des moyens (17) de réception de caractères sur la liaison asynchrone, les caractères émis et reçus sur la liaison asynchrone bidirectionnelle, ainsi que ledit flux, ayant des débits moyens identiques, **caractérisé en ce que** les moyens de commande d'émission coopèrent avec les moyens de réception pour commander l'émission d'un caractère depuis la mémoire tampon en réponse à la réception d'un caractère sur la liaison asynchrone.

2. Dispositif d'interface selon la revendication 1, dans lequel ledit flux de caractères est un flux synchrone associé à un flux de sens inverse en mode duplex.

3. Dispositif d'interface selon la revendication 2, dans lequel les moyens de réception de caractères sur la liaison asynchrone comprennent une autre mémoire tampon (17) dans laquelle des caractères sont écrits depuis la liaison asynchrone (4) et lus pour former ledit flux de sens inverse, le dispositif comprenant en outre des moyens (18) de régulation du débit moyen des caractères sur la liaison asynchrone, délivrant un signal d'autorisation de transfert de caractères à une unité raccordée à la liaison asynchrone en fonction du remplissage de ladite autre mémoire tampon.

4. Système de communication, comprenant un ordinateur (3) relié par une liaison asynchrone (4) à un équipement (1) ayant un fonctionnement synchrone, dans lequel l'ordinateur comprend un processeur (10) agencé pour exécuter des applications de communication impliquant l'échange de caractères en duplex avec l'équipement, et une interface (6) de raccordement à la liaison asynchrone comportant une mémoire tampon (7) de réception de caractères depuis l'équipement, l'échange de caractères avec l'équipement comprenant l'exécution par le processeur d'une procédure d'interruption au cours de laquelle, si le processeur commande l'émission d'au moins un caractère sur la liaison asynchrone, il lit le contenu de la mémoire tampon de réception, **caractérisé en ce que** ledit équipement comporte un dispositif d'interface (15) conforme à l'une quelconque des revendications 1 à 3 pour le raccordement à la liaison asynchrone.

5. Système de communication selon la revendication 4, dans lequel ledit équipement (1) comporte en outre une interface synchrone (5) pour le raccordement à un réseau de télécommunications.

6. Système de communication selon la revendication 4 ou 5, dans lequel lesdites applications comprennent des applications de téléphonie, de télécopie, de modem, de transmission de données, de serveur vocal, de traitement de parole, d'annulation d'écho et/ou de reconnaissance de parole.

## Patentansprüche

1. Schnittstellenvorrichtung, umfassend:
einen Pufferspeicher (16), welcher einen Fluss numerischer Zeichen empfängt, Mittel (19) zur Steuerung/Regelung des Sendens von vom Pufferspeicher stammenden Zeichen auf einer asynchronen bidirektionalen Verbindung (4), und Mittel (17) zum Empfang von Zeichen auf der asynchronen Verbindung, wobei die auf der asynchronen bidirektionalen Verbindung empfangenen und ausgesendeten Zeichen, sowie der Fluss identische mittlere Durchflüsse aufweisen, **dadurch gekennzeichnet, dass** die Mittel zur Steuerung/Regelung des Sendens mit den Mittel zum Empfang zusammenarbeiten, um in Antwort auf den Empfang eines Zeichens das Senden eines Zeichens vom Pufferspeicher auf der asynchronen Verbindung zu steuern/regeln.

2. Vorrichtung nach Anspruch 1, bei der der Zeichenfluss ein snychroner Fluss ist, welcher mit einem inversen Fluss im Duplexmodus verknüpft ist.

3. Vorrichtung nach Anspruch 2, bei der die Mittel zum Empfang von Zeichen auf der asynchronen Verbindung einen weiteren Pufferspeicher (17) umfassen, in welchem die Zeichen von der asynchronen Verbindung (4) geschrieben werden und in welchem die Zeichen gelesen werden, um den inversen Fluss zu bilden, wobei die Vorrichtung femer Mittel (18) zur Regelung des mittleren Durchflusses der Zeichen auf der asynchronen Verbindung umfasst, welche ein Autorisierungssignal für die Zeichenübertragung an eine an der asynchronen Verbindung angeschlossene Einheit liefert und zwar in Funktion der Belegung des weiteren Pufferspeichers.

4. Kommunikationssystem umfassend einen Computer (3), welcher über eine asynchrone Verbindung (4) mit einem Element (1) verbunden ist, das eine synchrone Funktionsweise aufweist, wobei der Computer umfasst: einen Prozessor (10), der dazu ausgerüstet ist, Kommunikationsanwendungen auszuführen, welche den Austausch von Zeichen im Duplex mit dem Element implizieren, und eine Verbindungsschnittstelle (6) mit der asynchronen Verbindung, welche einen Pufferspeicher (7) zum Empfang von Zeichen von dem Element umfasst, wobei der Austausch der Zeichen mit dem Element die Ausführung einer Unterbrechungsprozedur durch den Prozessor umfasst, in deren Verlauf der Prozessor den Inhalt des Empfangs-Pufferspeichers liest, sofern der Prozessor das Senden wenigstens eines Zeichens auf der asynchronen Verbindung steuert/regelt, **dadurch gekennzeichnet, dass** das Element eine Schnittstellenvorrichtung (15) entsprechend einem der Ansprüche 1 bis 3 umfasst für den Anschluss an die asynchrone Verbindung.

5. Kommunikationssystem nach Anspruch 4, bei der das Element (1) ferner eine synchrone Schnittstelle (5) umfasst für den Anschluss an einem Telekommunikationsnetzwerk.

6. Kommunikationssystem nach Anspruch 4 oder 5, bei der die Anwendungen umfassen: Telefonie-Anwendungen, Telekopie-Anwendungen, Modem-Anwendungen, Datenübertragungs-Anwendungen, stimmartige Server-Anwendungen, Sprachverarbeitungs-Anwendungen, Anwendungen der Echounterdrückung oder/und der Erkennung von Sprache.

## Claims

1. Interface device comprising a buffer memory (16) receiving a flow of digital characters, means (19) for commanding the transmission of characters from said buffer memory on a bidirectional asynchronous link (4), and means (17) for reception of characters on the asynchronous link, the characters transmitted and received on the bidirectional asynchronous link and said flow having identical mean flow rates, **characterised in that** the means for commanding the transmission co-operate with the means for reception to command the transmission of a character from the buffer memory in response to the reception of a character on the asynchronous link.

2. Interface device according to claim 1, wherein said character flow is a synchronous flow associated with a flow in the opposite direction in duplex mode.

3. Interface device according to claim 2, wherein the means of reception of characters on the asynchronous link comprise another buffer memory (17) to which characters are written from the asynchronous link (4) and read to form said flow in the opposite direction, the device also comprising means (18) for regulating the mean flow rate of the characters on the asynchronous link, supplying a signal for authorisation of a transfer of characters to a unit connected to the asynchronous link as a function of the fill level of said other buffer memory.

4. Communication system comprising a computer (3) linked by an asynchronous link (4) to an apparatus (1) with a synchronous operation, wherein the computer comprises a processor (10) arranged to perform communication applications involving the exchange of characters with the apparatus in duplex mode, and an interface (6) for connection to the asynchronous link comprising a buffer memory (7) for reception of characters from the apparatus, the exchange of characters with the apparatus comprising performance by the processor of an interrupt procedure during which, if the processor commands the transmission of at least one character on the asynchronous link, it reads the content of the reception buffer memory, **characterised in that** said apparatus comprises an interface device (15) in accordance with any of claims 1 to 3 for connection to the asynchronous link.

5. Communication system according to claim 4, wherein said apparatus (1) also comprises a synchronous interface (5) for connection to a telecommunications network.

6. Communication system according to claim 4 or 5, wherein said applications comprise telephony, fax, modem, data transmission, voice server, voice processing, echo cancellation and/or voice recognition applications.
